# EUROPEAN PATENT SPECIFICATION

(11) **EP 2 695 981 B1**
(45) Date of publication and mention of the grant of the patent: **24.12.2014**
(21) Application number: 13179598.1
(22) Date of filing: 07.08.2013
(51) Int. Cl.: D04H 1/4209

(54) **Odor-free binder for mineral wool and mineral wool product thereby bound**
Geruchsfreies Bindemittel für Mineralwolle und dadurch gebundenes Mineralwollprodukt
Liants inodores pour laine minérale et produit de laine minérale ainsi lié

(30) Priority: 10.08.2012 DE 102012214301
(43) Date of publication of application: 12.02.2014
(73) Proprietor: Saint-Gobain Isover, 92400 Courbevoie (FR)
(72) Inventor: Hünig, Hagen, 69221 Dossenheim (DE)
(74) Representative: Winter, Brandl, Fürniss, Hübner, Röss, Kaiser, Polte - Partnerschaft mbB

(56) References cited:
- EP-A1- 1 741 763
- DE-A1-102005 056 791
- US-A- 4 235 950
- US-A1- 2008 038 977

## Description

The present invention relates to a binder for mineral wool according to claim 1, a mineral wool product thereby bound according to claim 5, a method for producing a binder for mineral wool according to claim 7.

In the manufacture of bound mineral wool products from a molten glass or mineral material it has for a long time been accepted practice to apply, following fiberization of the molten material, a binder on the basis of phenol-formaldehyde resin onto the fibers while still hot. This is preferably done inside the chute following fiberization, for example in accordance with the blast drawing method according to DE 35 09 426 A1.

Here a phenol-formaldehyde resin, being the best-known binder in the prior art, is preferably sprayed on the fibers in the form of an aqueous solution or dispersion, with the phenol-formaldehyde resin then beginning to polymerize on the fiber surface owing to the still relatively high temperatures of the fibers and interconnecting the individual fibers by the polymerization process, in particular at crossing points of fibers, because the fibers overlying each other at a crossing point are embedded there, more or less, by solidified droplets of resin, whereby the mobility of the individual fibers among each other is initially impeded and later on prevented substantially entirely during curing by means of hot gases, for example in a tunnel oven.

Such a binder is described, e.g., in US 3,231,349.

Apart from this, formaldehyde-free binders for mineral wool are also known in the prior art which are based on other polymers than phenol-formaldehyde resin polymers.

Thus, for example, EP 0 583 086 B2 describes a curable, formaldehyde-free, aqueous binder composition for glass fibers on the basis of polymer polyacids such as, e.g., polyacrylic acid, and a polyol.

According to EP 0 583 086 B2, a β-hydroxyalkylamide, for example [N,N-di(β-hydroxyethyl)]-adipamide, is preferably employed as a polyol, however it is also possible to use glycolated ureas, diethanolamine or triethanolamine, for instance.

Similar binder compositions for mineral fibers are also known, for example, from US 6,331,350 B1, EP 0 990 727 A1, EP 0 990 728 A1, and EP 0 990 729 A1. The enumerated prior-art documents equally utilize a polyacrylic acid as a polymer polyacid. Alkanolamines are also employed as a polyol.

One common trait of any prior-art binders containing urea and further amines that are reacted into the phenol-formaldehyde polymer matrix is, however, that being resols, they are transformed even after a short period via hydrolysis and condensation reactions; accordingly, after curing in the mineral wool product these synthetic materials have a tendency to hydrolyze the various polymer bonds because of atmospheric humidity and also microbial processes and may emit malodorous volatile substances to the ambient atmosphere. These substances may include amines, amides (e.g., isopropylcarbamate), oxiranes, i.e., cyclic acetals, phenol and also urotropine, which are particularly evil-smelling.

This has a particularly unpleasant effect when mineral wool products are to be used for insulating inner spaces.

Before this background it is the object of the present invention to provide substantially odor-free or at least low-odor bound mineral wool products which may readily also be used for indoor insulation.

This object is achieved through a binder in accordance with the features of claims 1 and 9, a mineral wool product according to claim 5, and a method according to claim 7.

In particular the present invention relates to a binder for mineral wool, containing:
(a) an aqueous dispersion of a sodium-catalyzed, non-neutralized phenolic resin having a solids content of 25 to 65 % (mass) as well as a content of free formaldehyde of no more than approx. 3 % (mass);
(b) at least one ethanolamine-neutralized polyacrylic acid having a mass average molar mass (M_{w}) between 3 and 25 kD as measured by GPC in analogy with DIN 55672, wherein the mass-related neutralization ratio between polyacrylic acid and ethanolamine is 100:40 to 100:70; and
(c) at least one silane selected from the group consisting of: mono-, di-, and trialkoxysilanes having a C₁ to C₈ alkoxy group, wherein the alkoxysilane carries at least one C₂ to C₁₀ N-aminoalkyl group; and 3-aminopropyltriethoxysilane.

The present invention moreover relates to a method for producing a binder for mineral wool, wherein
(a) in order to prepare a solution Mᵢ, at least one polyacrylic acid present in water and having a mass average molar mass (M_{w}) between 3 and 25 kD as measured by GPC in analogy with DIN 55672, is neutralized with ethanolamine such that the neutralization ratio between the mass of employed polyacrylic acid and the mass of employed ethanolamine is 100:40 to 100:70;
(b) an aqueous dispersion at least of one sodium-catalyzed, non-neutralized phenolic resin having a solids content from 25 to 65 % (mass) and a content of free formaldehyde of no more than approx. 3 % (mass) is added to the solution Mᵢ; and
(c) furthermore at least one silane is added which is selected from the group consisting of: mono-, di-, and trialkoxysilanes having a C₁ to C₈ alkoxy group, wherein the alkoxysilane carries at least one C₂ to C₁₀ N-aminoalkyl group; and 3-aminopropyltriethoxysilane.

Preferentially the method according to the invention is performed by adding the ethanolamine to the polyacrylic acid in such a way that a temperature of 50°C to 70°C, in particular approx. 60°C, is not exceeded. Hereby it is ensured on the one hand that a controlled neutralization process will unfold, and on the other hand that flocculations are avoided.

It is true that urea-containing mixed systems of phenol-formaldehyde condensates and polymer organic acids are described in the prior art of binders for mineral wool. Thus, e.g., DE 10 2008 044 999 A1 discloses a three-component binder system for mineral wool consisting of
- a resin system (phenol-formaldehyde resin),
- an amine base having a large number of amine compounds, i. a. also alkanolamines among which ethanolamine is also mentioned; as well as
- an organic acid. For an organic acid it is possible to employ a polyacrylic acid having a molecular mass of 0.5 to 100 kD.

In contrast with the present invention, however, an alkali- or alkaline earth-containing phenol-formaldehyde resin is neutralized by means of the polyacrylic acid according to DE 10 2008 044 999 A1, while in the present invention the polyacrylic acid is neutralized with ethanolamine even before the addition of the phenol-formaldehyde resin.

Apart from this - and equally in contrast with the binders of the prior art of DE 10 2008 044 999 - a binder in accordance with the invention uses ethanolamine in a considerable quantity, i.e., in a mass-related neutralization ratio of 100:40 to 100:70 (polyacrylic acid : ethanolamine), whereas the binders of DE 10 2008 044 999 contain the amine base merely in catalytic quantities.

The present invention furthermore relates to a mineral wool product bound by the binder of the invention.

Such mineral wool products are substantially odor-free. In particular it was found in studies that usual phenol-formaldehyde-urea resins having been stored for 36 h at 10°C in accordance with customary storage conditions until their utilization may undergo a transformation in such a way that mineral wool products thereby bound will exude an unpleasant odor following a 24-hour climatization treatment at 35 °C and 95% of relative atmospheric humidity, whereas the mineral wool products in accordance with the invention were substantially still odor-free after a same climatization treatment, even after the resin had been stored for 12d at 10°C. As the inventors could ascertain by way of gas chromatography and coupling with mass spectrometry, the development of odors is accompanied by the release of cyclic acetals, urea derivatives, as well as considerably quantities of phenol and urotropine.

A preferred binder is one where a phenolic resin having a pH of 8.5 to 9.5, preferably 9.1, is used and/or where the solids content is from 30 to 60 % (mass), preferably 40 to 50 % (mass), and/or the water-dilutability of the phenolic resin is better than 1:100. Such a binder may readily be processed on a traditional production line without modification of the existing application systems and curing periods.

As a preferred silane, 3-aminopropyltriethoxysilane has found good practical acceptance on account of its good commercial availability and its rather modest pricing.

A preferred embodiment of a binder may in addition contain glycolic acid as a promoting agent and/or polyethylene imine as a retarding agent. In practical use, a homopolymer polyethylene imine having a mass average molar mass (M_{w}) of 0.5 to 3 kD, measured by GPC in analogy with DIN 55672, was found to be particularly useful.

Further advantages and features of the present invention result from the description of practical examples and from the figures of the drawings, wherein:
- Fig. 1: is a gas chromatogram with MS peak/structure allocation for a phenolic resin mixture with urea according to the prior art after 36-hour storage at 10°C and subsequent curing to form the synthetic material during 2 h at 150°C; and
- Fig. 2: is a gas chromatogram with MS peak/structure allocation for a urea-free phenolic resin mixture in accordance with the invention with polyacrylic acid 1, neutralized with ethanolamine after 12-day storage at 10°C and subsequent curing to form the synthetic material during 2 h at 150°C.

### Practical Examples

In order to manufacture the binders in accordance with the invention, the following chemicals were employed:
- Phenolic resin 1: sodium-catalyzed, neutralized with amidosulfuric acid to pH 7.4; in water 48.5% solids content, 7% free formaldehyde, water dilutability > 1:100.
- Phenolic resin 2: sodium-catalyzed, non-neutralized, pH 9.1; in water 46.2% solids content, free formaldehyde 3%, water dilutability > 1:100.
- 3-Aminopropyltriethoxysilane 99%, CAS: 919-30-2.
- Low-molecular polyethylene imine: 50% in water, mean molecular weight 1.3 kD, CAS: 25987-06-8 (Lupasol G20 BASF)
- Glycolic acid technical, 70% in water, CAS: 79-14-1.
- Urea technical, 99%, CAS: 57-13-6.
- Ethanolamine technical, 98,5%, CAS: 141-43-5.
- Polyacrylic acid 1: 48.8% in water, mass average molar mass Mw 4 kD
- Polyacrylic acid 2: 50.1 % in water, mass average molar mass Mw 10 kD.
- Polyacrylic acid 3: 50.0% in water, mass average molar mass Mw 20 kD.
- Polyacrylic acid 4: 35% in water, mass average molar mass Mw 100 kD.

As a comparative example a PFU resin at a solids ratio of resin : urea of 70/30 was prepared, with the recipe for 100 g having a solids content of 40% consisting of 57.73 g of phenolic resin 1, 12.12 g of urea, and 30.15 g of water.

Starting out from this PFU resin a comparative binder BM-PFU1 on the basis of phenolic resin 1 was furthermore prepared with a recipe for 100 g having a solids content of 40% of 99 g of PFU resin; 0.2 g of 3-aminopropyltriethoxysilane; 0.2 g of glycolic acid, and 0.06 g of ethanolamine.

The general procedure in the production of mixtures of phenolic resin 2 and the respective polyacrylic acid neutralized with ethanolamine was as follows: Polyacrylic acid and dilution water were placed in a glass beaker and homogenized. Then the ethanolamine was added under stirring such that the temperature did not exceed 60°C. Subsequently the mixture was cooled to 30°C, the phenolic resin 2 was added, and subsequent stirring at ambient temperature was performed for an additional 30 minutes. The finished resin was transferred into a sealable storage container and cooled by storing at 10°C. The recipes are indicated in Tables 1 and 2.

**Table 1**

| | | |
|---|---|---|
| Recipes: Polyacrylic acids-ethanolamine | | |

| Designation Mᵢ | Ratio of polyacrylic acid and ethanolamine | Recipe per 100g with 40% solids |
|---|---|---|
| M1 | 100:70 | 48.21 g polyacrylic acid 1, 16.72 g ethanolamine, 36.06 g water |
| M2 | 100:60 | 51.23 g polyacrylic acid 1, 15.23 g ethanolamine, 33.54 g water |
| M3 | 100:50 | 54.64 g polyacrylic acid 1, 13.54 g ethanolamine, 31.82 g water |
| M4 | 100:40 | 58.55 g polyacrylic acid 1, 11.60 g ethanolamine, 29.85 g water |
| M5 | 100:70 | 46.96 g polyacrylic acid 2, 16.72 g ethanolamine, 36.31 g water |
| M6 | 100:70 | 47.10 g polyacrylic acid 3, 16.74 g ethanolamine, 36.25 g water |
| M7 | 100:70 | 67.22 g polyacrylic acid 4, 16.72 g ethanolamine, 16.05 g water |

**Table 2**

| Recipes: Mixtures of phenolic resin 2 - neutralized polyacrylic acid | | |
|---|---|---|
| Designation | Ratio of neutralized polyacrylic acid and phenolic resin | Recipe per 100 g with 40% solids |
| PFP1 | 1:1 | 50 g M1, 43.29 g phenolic resin 2, 6.71 g water |
| PFP2 | 1:1 | 50 g M2, 43.29 g phenolic resin 2, 6.71 g water |
| PFP3 | 1:1 | 50 g M3, 43.29 g phenolic resin 2, 6.71 g water |
| PFP4 | 1:1 | 50 g M4, 43.29 g phenolic resin 2, 6.71 g water |
| PFP5 | 1:1 | 50 g M5, 43.29 g phenolic resin 2, 6.71 g water |
| PFP6 | 1:1 | 50 g M6, 43.29 g phenolic resin 2, 6.71 g water |
| PFP7 | 1:1 | 50 g M7, 43.29 g phenolic resin 2, 6.71 g water |

A binder BM-PFP1 in accordance with the invention was produced from a mixture of phenolic resin 2 and the ethanolamine-neutralized polyacrylic acid PFP1 with addition of 3-aminopropyltriethoxysilane, glycolic acid, and polyethylene imine in accordance with the following recipe:
BM-PFP1: 98.52 g of PFP1, 0.2 g of 3-aminopropyltriethoxysilane, 0.28 g of glycolic acid, 0.39 g of polyethylene imine.

Further binders may be produced in an analogous manner.

Various characteristic values characterizing the properties were determined on the resins or the binders, respectively:
- storage stability at 10°C
- reactivity of the binder
- free formaldehyde content
- determination of volatile substances/olfactory system
- aging resistance

### Determination of the storage stability at 10°C:

1 g of the respective resins was diluted with 100 g of distilled water and stored at 10°C. The occurrence of turbidity in the batch is considered a loss of dilutability and the end of storability.

**Table 3**

| Comparison PFP1 (invention) with PFU resin (prior art) | | |
|---|---|---|
| System | pH value | Loss of dilutability after days at 10°C |
| PFU (comp.) | 6.9 | 5 |
| PFP1 | 7.5 | 12 |

### Determination of the reactivity of the used resin systems or binders:

The method for determining the reactivity of binders for mineral wool products is described in DE 10 2008 044 999 A1. Values characterizing the method are torques of force measurement, wherein the so-called B-time until reaching a torque of 1 mNm should not be less than a value of about 1200 s, and the so-called A-time until reaching a torque of 75 mNm should not exceed a value of about 2100 s.

The mentioned values of 1,200 s for the B-time and 2,100 s for the A-time do, however, not represent absolute values for resin systems per se but may be influenced depending on certain marginal conditions such as, e.g., the addition of reaction promoting and/or retarding agents.

Before this background it is possible to take the A- and B-times of a given resin system, in particular the resin system of the present invention, into the area of > 1200 s for the B-time and <2100 s for the A-time by means of suitable reaction promoting and/or retarding agents.

In a first study series the influence of the neutralization ratio on the reactivity was determined on the example of samples PFP1 to PFP4. The results are represented in Table 4.

**Table 4**

| Determination of reactivity | | |
|---|---|---|
| System (neutralization ratio) | B-time [s] | A-time [s] |
| PFP1 (100:70) | 1,676 | 2,116 |
| PFP2 (100:60) | 1,092 | 1,386 |
| PFP3 (100:50) | 924 | 1,218 |
| PFP4 (100:40) | 630 | 744 |

The results show that mixtures of polyacrylic acid 2 and ethanolamine in a ratio of 100:40 to 100:70 are situated in the fundamentally suitable range. In the more critical case of PFP4 the reactivity may be influenced expediently due to the small distance between B-time and A-time, i.e., the B-time may be raised to the target value of greater than 1,200 s through suitable additives without exceeding the upper limit of the A-time.

In a second study series the influence of the mass average molar mass Mw, i.e., of the mean molecular weight, on the reactivity of the resin system was determined by means of the samples PFP1, PFP5, PFP6, and PFP7. The results are represented in Table 5.

**Table 5**

| Determination of reactivity | | |
|---|---|---|
| System (M_{w}) | B-time [s] | A-time [s] |
| PFP1(4kD) | 1,676 | 2,116 |
| PFP5 (10 kD) | 1,456 | 1,921 |
| PFP6 (20 kD) | 1,152 | 1,872 |
| PFP7 (100 kD) | 769 | 1,479 |

In the case of PFP7 the distance between B-time and A-time is comparatively large, wherein increasing the B-time through suitable measures to the target value of more than 1,200 s resulting in the upper limit of the A-time being exceeded. PFP7 is therefore not suited as a binder base.

In Table 6 the result of the studies of the standard binder is represented in comparison with an example binder in accordance with the invention.

**Table 6**

| Reactivity of the binders | | |
|---|---|---|
| Binder | B-time [s] | A-time [s] |
| BM-PFU1 (resin after 36 h) | 1,358 | 1,799 |
| BM-PFP1 (resin after 36 h) | 1,431 | 1,846 |
| BM-PFP1 (resin after 12 d) | 1,430 | 1,847 |

The results show that the binder in accordance with the invention presents a reactivity for the curing process that is similar to the standard PFU-binder. It was furthermore found that the reactivity remains practically unchanged over the 12-day time period of storage stability.

### Determination of free formaldehyde:

The content of free formaldehyde is determined by the hydroxyl-ammonium hydrochloride method according to EN 11402 on resin samples that had been stored at 10°C for 36 h; water - 2-propanol was employed as a solvent system at a volume ratio of 1:1 in order to avoid precipitations of the polyacrylic acid. The results are summarized in Table 7.

**Table 7**

| Determination of the free formaldehyde content | | |
|---|---|---|
| System | pH | Free formaldehyde [mass %] after storage at 10 °C |
| PFU(comp.) | 6.9 | 3.0 (36 h) |
| PFP1 | 7.5 | 0.6 (36 h) |

Table 7 shows considerably reduced contents of free formaldehyde in the resin systems according to the invention, which has a positive effect on formaldehyde emissions possibly taking place.

### Determination of volatile substances/olfactory system:

The determination of volatile substances was carried out by means of GC-MS. Following a defined storage, 5 g of the respective resins was cured during 2 h at 150°C. The obtained synthetic material was powdered in a vibration grinding mill during 5 min at 70 Hz. About 1 g of the powder was kept in 4 g of 2-propanol (for exact masses and storage conditions see Table 8) for 72 h at 40°C in the absence of mechanical movement. Cooling to approx. 23°C was then performed, and the supernatant solution was examined by means of GC - MS.

The mass of the synthetic material was intentionally selected to be high in order to clarify the problems leading to annoyance due to bad smell. A product presenting a volumetric weight of 20 kg/m³ and 6% loss on ignition contains approx. 1200 g of synthetic material per m³. Usual measurement values of absolute concentrations in cases of annoyance due to bad smell are in the order of about 100 mg/kg synthetic material or cured binder, which shows that about 120 mg of the odoriferous substances is distributed to 1 m³ of mineral wool product.

**Table 8**

| Initial weights for the determination of potential emitters | | | |
|---|---|---|---|
| Sample | Initial weight of powder [g] | Olfactory system powder | Initial weight of 2-propanol [g] |
| PFU (36h) | 1.0060 | repulsive | 4.1708 |
| PFP1 (12d) | 1.0046 | faintly perceptible | 4.0458 |

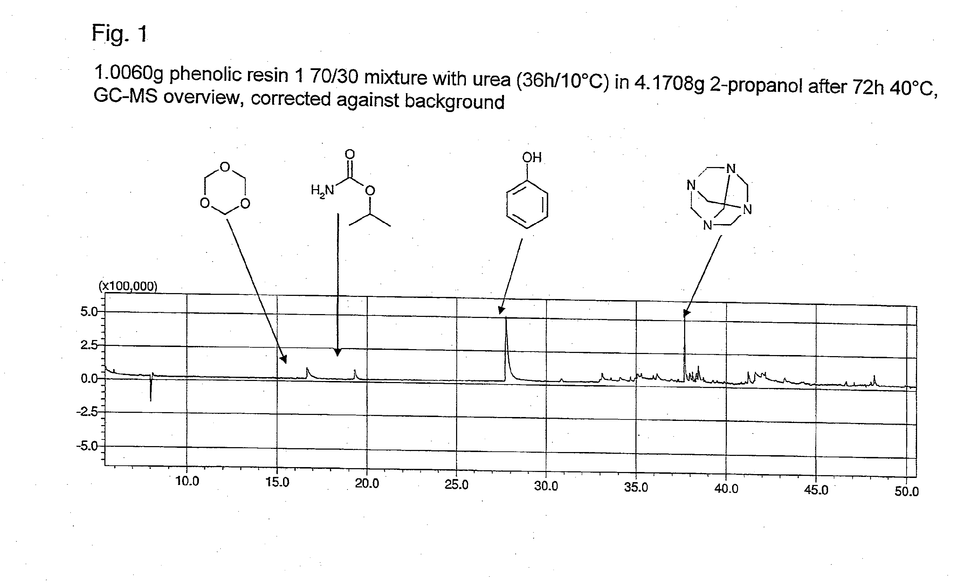

Fig. 1 represents a gas chromatogram which shows the gas release comportment of a cured phenolic resin 1 with urea in a mass ratio of 70:30 (according to the prior art) after 36 h at 10°C. A sample body of the resin was weighed and received in 2-propanol; following storage during 72h at 40°C a GC-MS analysis was carried out in the supernatant, and the obtained GC peaks were identified via their mass fragments.

In the case of the prior-art binders, the following chemical compounds which cause an unpleasant odor even in the range of 1 to 5 ppm or even less, were found already after 36-hour storage at 10°C:

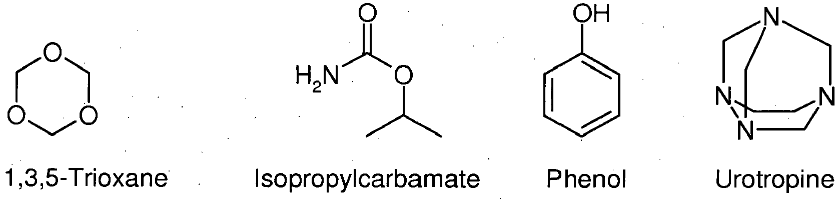

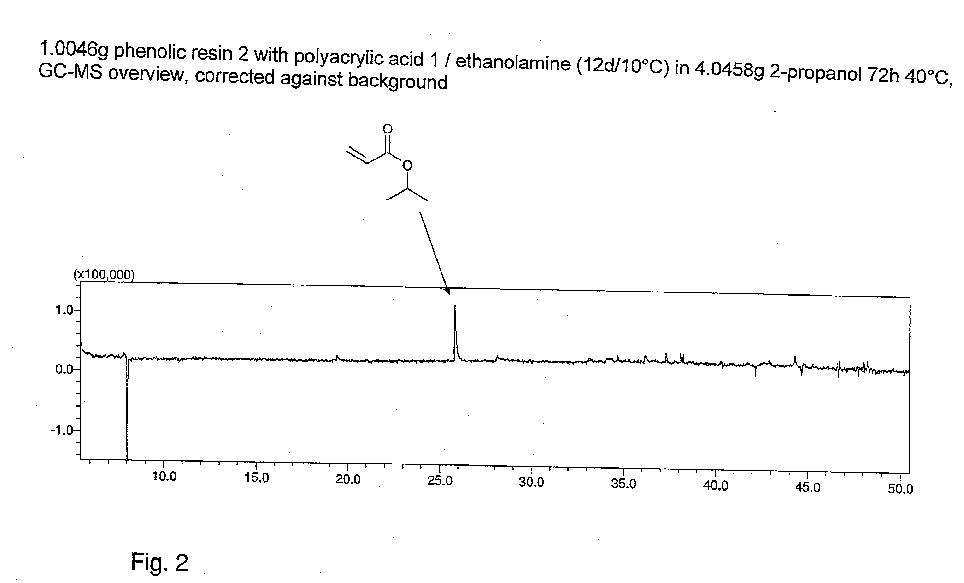

In the case of the binders in accordance with the present invention, on the other hand, nitrogenous compounds were not found in the GC-MS analysis even after 12 days (Fig. 2), with no odors being created accordingly.

Fig. 2 represents a gas chromatogram which shows the gas release comportment of a cured phenolic resin 1 with a polyacrylic acid neutralized by means of ethanolamine after 12 days at 10°C. A sample body of the resin was weighed and received in 2-propanol, GC-MS analysis was carried out in the supernatant following storage for 72h at 40°C, and the obtained GC peaks were identified via their mass fragments.

As regards volatile compounds, merely small quantities of acrylic acid could be found in the GC of Fig. 2, which show up as isopropyl esters in the GC on account of the experimental conditions (reception in 2-propanol):

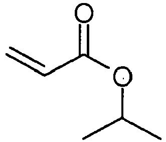

The absence of any amine derivatives in the supernatant of the resin in accordance with the invention is excellently correlated with its inodorousness, so that mineral wool products bound by means of the binder of the invention are excellently suited for applying an acoustic/thermal insulation in internal spaces.

### Determination of aging resistance:

The determination of the aging resistance was carried out in accordance with the climatization treatment described in DE 10 2005 056 794 A1, the so-called Nord test, by means of experimental insulation materials on a glass having a composition according to WO 2005/033032 with a volumetric weight of 60 kg/m³ and a loss on ignition of 3.4 %. The test samples have dimensions (length, width, height) of 200 × 200 × 60 mm. The characteristic quantity is the thickness change of the sample bodies. A sample body 1 is additionally given for each binder as a reference without climatization treatment according to Nord test.

**Table 9**

| Change of geometry according to Nord test, sample body 1 (PK1) = reference without climatization treatment | | |
|---|---|---|
| Binder | Length × width × height before Nord test | Length × width × height after Nord test |
| BM-PFU (resin after 36h) [prior art] | PK1: 200×200×60 | PK1: 200×200×60 |
| | PK2: 200×200×60 | PK2: 200×200×61 |
| | PK3: 200×200×59 | PK3: 200×200×62 |
| | PK4: 200×200×60 | PK4: 200×200×62 |
| BM-PFP1 (resin after 24-h storage) [invention] | PK1: 200×200×60 | PK1: 200×200×60 |
| | PK2: 200×200×61 | PK2: 200×200×63 |
| | PK3: 200×200×60 | PK3: 200×200×60 |
| | PK4: 200×200×58 | PK4: 200×200×60 |
| BM-PFP11 (resin after 12-day storage) [invention] | PK1: 200×200×59 | PK1: 200×200×59 |
| | PK2: 200×200×60 | PK2: 200×200×61 |
| | PK3: 200×200×55 | PK3: 200×200×57 |
| | PK4: 200×200×62 | PK4: 200×200×62 |

Table 9 shows that the binder in accordance with the invention meets the requirement of a comportment comparable to that of the standard PFU binder in the Nord test, i.e., no change of thickness due to an irreversible impairment of the binder system.

The mineral wool products bound by the binder in accordance with the invention are excellently suited for the internal insulation of structures, particularly due to their practically non-existent gas release comportment and the ensuing odorlessness.

## Claims

1. A binder for mineral wool, containing:
(a) an aqueous dispersion of a sodium-catalyzed, non-neutralized phenolic resin having a solids content of 25 to 65 % (mass) as well as a content of free formaldehyde of no more than approx. 3 % (mass);
(b) at least one ethanolamine-neutralized polyacrylic acid having a mass average molar mass (M_{w}) between 3 and 25 kD as measured by GPC in analogy with DIN 55672, wherein the mass-related neutralization ratio between polyacrylic acid and ethanolamine is 100:40 to 100:70; and
(c) at least one silane selected from the group consisting of: mono-, di-, and trialkoxysilanes having a C₁ to C₈ alkoxy group, wherein the alkoxysilane carries at least one C₂ to C₁₀ N-aminoalkyl group; and 3-aminopropyltriethoxysilane.

2. The binder according to claim 1, **characterized in that** the phenolic resin has a pH of 8.5 to 9.5, preferably 9.1, and/or the solids content is from 30 to 60 % (mass), preferably 40 to 50 % (mass), and/or the water-dilutability of the phenolic resin is better than 1:100.

3. The binder according to claim 1 or 2, **characterized in that** it contains 3-aminopropyltriethoxysilane as the silane.

4. The binder according to any one of the preceding claims, **characterized in that** it additionally contains glycolic acid and/or polyethylene imine, in particular a low-molecular polyethylene imine having a mass average molar mass (M_{w}) of 0.5 to 3 kD as measured by GPC in analogy with DIN 55672.

5. A mineral wool product, **characterized in that** it is bound by a binder according to at least one of claims 1 to 4.

6. The mineral wool product according to claim 5, **characterized in that** it is substantially odor-free.

7. A method for producing a binder for mineral wool,
**characterized in that**
(a) in order to prepare a solution Mᵢ, at least one polyacrylic acid present in water and having a mass average molar mass (M_{w}) between 3 and 25 kD as measured by GPC in analogy with DIN 55672, is neutralized with ethanolamine such that the neutralization ratio between the mass of employed polyacrylic acid and the mass of employed ethanolamine is 100:40 to 100:70;
(b) an aqueous dispersion at least of one sodium-catalyzed, non-neutralized phenolic resin having a solids content from 25 to 65 % (mass) and a content of free formaldehyde of no more than approx. 3 % (mass) is added to the solution Mᵢ; and
(c) furthermore at least one silane is added which is selected from the group consisting of: mono-, di-, and trialkoxysilanes having a C₁ to C₈ alkoxy group, wherein the alkoxysilane carries at least one C₂ to C₁₀ N-aminoalkyl group; and 3-aminopropyltriethoxysilane.

8. The method according to claim 7, **characterized in that** the ethanolamine is added to the polyacrylic acid in such a way that a temperature of 50°C to 70°C, in particular approx. 60°C, is not exceeded.

## Patentansprüche

1. Bindemittel für Mineralwolle, enthaltend:
(a) eine wässrige Dispersion eines Natrium-katalysierten, nicht neutralisierten Phenolharzes mit einem Feststoffgehalt von 25 bis 65 Massen-% sowie einem Gehalt an freiem Formaldehyd von nicht mehr als ungefähr 3 Massen-%;
(b) mindestens eine Ethanolamin-neutralisierte Polyacrylsäure mit einem Massenmittel der Molmasse (M_{w}) von zwischen 3 und 25 kD, gemessen mittels GPC analog zu der DIN 55672, wobei das massebezogene Neutralisierungsverhältnis zwischen Polyacrylsäure und Ethanolamin 100:40 bis 100:70 beträgt; und
(c) mindestens ein Silan ausgewählt aus der Gruppe bestehend aus: Mono-, Di-, und Trialkoxysilanen mit einer C₁- bis C₈-Alkoxygruppe, wobei das Alkoxysilan mindestens eine C₂- bis C₁₀-N-Aminoalkylgruppe trägt; und 3-Aminopropyltriethoxysilan.

2. Bindemittel nach Anspruch 1, **dadurch gekennzeichnet, dass** das Phenolharz einen pH von 8,5 bis 9,5, vorzugsweise 9,1, aufweist und/oder der Feststoffgehalt von 30 bis 60 Massen-%, vorzugsweise 40 bis 50 Massen-%, beträgt und/oder die Wasserverdünnbarkeit des Phenolharzes besser als 1:100 ist.

3. Bindemittel nach Anspruch 1 oder 2, **dadurch gekennzeichnet, dass** es 3-Aminopropyltriethoxysilan als das Silan enthält.

4. Bindemittel nach einem der vorhergehenden Ansprüche, **dadurch gekennzeichnet, dass** es zusätzlich Glycolsäure und/oder Polyethylenimin enthält, insbesondere ein niedermolekulares Polyethylenimin mit einem Massenmittel der Molmasse (M_{w}) von 0,5 bis 3 kD, gemessen mittels GPC analog zu der DIN 55672.

5. Mineralwolleprodukt, **dadurch gekennzeichnet, dass** es mittels eines Bindemittels gemäß mindestens einem der Ansprüche 1 bis 4 gebunden ist.

6. Mineralwolleprodukt nach Anspruch 5, **dadurch gekennzeichnet, dass** es im Wesentlichen geruchsfrei ist.

7. Verfahren zur Herstellung eines Bindemittels für Mineralwolle,
**dadurch gekennzeichnet, dass**
(a) man zur Herstellung einer Lösung Mᵢ, wenigstens eine Polyacrylsäure, die in Wasser vorliegt und ein Gewichtsmittel des Molekulargewichts (M_{w}) von zwischen 3 und 25 kD, gemessen mittels GPC analog zu der DIN 55672, aufweist, mit Ethanolamin derart neutralisiert, dass das Neutralisierungsverhältnis zwischen der Masse an eingesetzter Polyacrylsäure und der Masse an eingesetztem Ethanolamin 100:40 bis 100:70 beträgt;
(b) man zu der Lösung Mᵢ eine wässrige Dispersion von zumindest einem Natrium-katalysierten, nicht neutralisierten Phenolharz mit einem Feststoffgehalt von 25 bis 65 Massen-% und einem Gehalt an freiem Formaldehyd von nicht mehr als ungefähr 3 Massen-% gibt; und
(c) man ferner mindestens ein Silan zugibt, welches ausgewählt wird aus der Gruppe bestehend aus: Mono-, Di-, und Trialkoxysilanen mit einer C₁- bis C₈-Alkoxygruppe, wobei das Alkoxysilan mindestens eine C₂- bis C₁₀-N-Aminoalkylgruppe trägt; und 3-Aminopropyltriethoxysilan.

8. Verfahren nach Anspruch 7, **dadurch gekennzeichnet, dass** das Ethanolamin auf eine solche Weise zu der Polyacrylsäure gegeben wird, dass eine Temperatur von 50°C bis 70°C, insbesondere ungefähr 60°C, nicht überschritten wird.

## Revendications

1. Liant pour laine minérale, contenant :
(a) une dispersion aqueuse d'une résine phénolique non neutralisée catalysée par sodium ayant une teneur en matière sèche de 25 à 65 % (masse) ainsi qu'une teneur en formaldéhyde libre de pas plus d'approximativement 3 % (masse) ;
(b) au moins un poly(acide acrylique) neutralisé par éthanolamine ayant une masse molaire moyenne en masse (M_{w}) entre 3 et 25 kD telle que mesurée par GPC par analogie avec la norme DIN 55672, où le rapport de neutralisation relatif à la masse entre le poly(acide acrylique) et l'éthanolamine est de 100:40 à 100:70 ; et
(c) au moins un silane choisi dans le groupe consistant en : les mono-, di-, et tri-alcoxysilanes ayant un groupe alcoxy en C₁ à C₈, où l'alcoxysilane porte au moins un groupe N-aminoalkyle en C₂ à C₁₀ ; et le 3-aminopropyltriéthoxysilane.

2. Liant selon la revendication 1, **caractérisé en ce que** la résine phénolique a un pH de 8,5 à 9,5, de préférence 9,1, et/ou la teneur en matière sèche est de 30 à 60 % (masse), de préférence 40 à 50 % (masse), et/ou la capacité de dilution dans l'eau de la résine phénolique est meilleure que 1:100.

3. Liant selon la revendication 1 ou 2, **caractérisé en ce qu'**il contient du 3-aminopropyltriéthoxysilane en tant que silane.

4. Liant selon l'une quelconque des revendications précédentes, **caractérisé en ce qu'**il contient de surcroît de l'acide glycolique et/ou de la poly(éthylène imine), en particulier une poly(éthylène imine) de faible masse moléculaire ayant une masse molaire moyenne en masse (M_{w}) de 0,5 à 3 kD telle que mesurée par GPC par analogie avec la norme DIN 55672.

5. Produit de laine minérale, **caractérisé en ce qu'**il est lié par un liant selon au moins l'une des revendications 1 à 4.

6. Produit de laine minérale selon la revendication 5, **caractérisé en ce qu'**il est sensiblement dépourvu d'odeur.

7. Procédé de production d'un liant pour laine minérale,
**caractérisé en ce que**
(a) afin de préparer une solution Mᵢ, au moins un poly(acide acrylique) présent dans de l'eau et ayant une masse molaire moyenne en masse (M_{w}) entre 3 et 25 kD telle que mesurée par GPC par analogie avec la norme DIN 55672, est neutralisé avec de l'éthanolamine de telle sorte que le rapport de neutralisation entre la masse de poly(acide acrylique) employée et la masse d'éthanolamine employée est de 100:40 à 100:70 ;
(b) une dispersion aqueuse d'au moins une résine phénolique non neutralisée catalysée par sodium ayant une teneur en matière sèche de 25 à 65 % (masse) et une teneur de formaldéhyde libre de pas plus d'approximativement 3 % (masse) est ajoutée à la solution Mᵢ ; et
(c) de plus au moins un silane est ajouté, lequel est choisi dans le groupe consistant en : les mono-, di- et tri-alcoxysilanes ayant un groupe alcoxy en C₁ à C₈, où l'alcoxysilane porte au moins un groupe N-aminoalkyle en C₂ à C₁₀ ; et le 3-aminopropyltriéthoxysilane.

8. Procédé selon la revendication 7, **caractérisé en ce que** l'éthanolamine est ajoutée au poly(acide acrylique) de telle manière qu'une température de 50 °C à 70 °C, en particulier approximativement 60 °C, n'est pas dépassée.
